# EUROPEAN PATENT APPLICATION

(11) **EP 2 410 474 A1**
(43) Date of publication of application: **25.01.2012**
(21) Application number: 10170186.0
(22) Date of filing: 20.07.2010
(51) Int. Cl.: G06Q 10/00

(54) **System and method for controlling the deletion of data associated with electronic groups**

(71) Applicant: Research In Motion Limited, Waterloo, ON N2L 3W8 (CA)
(72) Inventor: Garg, Neeraj, Milton, Ontario L9T 6N6 (CA)
(74) Representative: Moore, Barry

(57) **Abstract**

A system and method are provided that utilize a mechanism for electronic communication group deletion based on the detection of the completion of the purpose of an event as specified upon creation of the electronic communication group. By specifying the expiry date of a group at the time of creation and notifying members of the expiry date, complete deletion of the group can be performed on the server side to conserve memory, while enabling group members to save content locally before the group is deleted. Upon creating a group, an expiry date can be set for the group and this expiry date and a purpose therefor notified to the members that join the group, and users are then able to join the group. Upon detecting the expiry date, the group members can be notified and permitted to perform a local save, extend the expiry date, etc. The server may then delete its copy of the data and the client devices enable or enforce deletion locally to recapture storage space.

## Description

The following relates generally to electronic communication groups and more particularly to controlling the deletion of data associated with electronic communication groups.

Electronic communication devices typically provide the ability to communicate using various media. The connectivity provided by such media enables groups of devices to communicate with each other under a common entity designated as a "group".

In many social networking environments, electronic communication groups can be created having an infinite duration. This may require a server and the devices themselves to store data associated with the group for indefinite periods of time. Since groups are being used to bring users together for many reasons, many short term, the number of groups and the amount of associated data can escalate quickly. Often in order to delete a group, members need to explicitly "leave" the group and then the content deleted and the group removed from the server side. Also, if the group name is to be reused, the group often needs to be wiped out completely before it can be used again. The more groups and associated content that is stored unnecessarily, the more strain there is on the server's resources.

### GENERAL

There may be provided a method of operating an electronic client device, the method comprising: creating an electronic communication group on the electronic client device, the electronic communication group including a plurality of members; establishing an expiry date for the electronic communication group; providing the expiry date to at least one other member in the electronic communication group; enabling at least some data associated with the electronic communication group to be saved locally thereon prior to passage of the expiry date; and enabling the data associated with the electronic communication group to be deleted subsequent to the passage of the expiry date.

There may also be provided a method of operating a server device, the method comprising: establishing an electronic communication group on the server device in response to creation thereof by a client device, the electronic communication group including a plurality of members; associating an expiry date with the electronic communication group, the expiry date having been established by the client device; storing data associated with the electronic communication group; and subsequent to passage of the expiry date, deleting the data associated with the electronic communication group.

There may also be provided an electronic client device comprising: a processor operable to: enable an expiry date to be established for an electronic communication group, the electronic communication group including a plurality of members; provide the expiry date to at least one other member in the electronic communication group; enabling at least some of data associated with the electronic communication group to be saved locally on the client device prior to the expiry date; and enabling the data associated with the electronic communication group to be deleted following passage of the expiry date.

There may also be provided a server device comprising: a processor operable to: establish an electronic communication group on the server device in response to creation thereof by a client device, the electronic communication group including a plurality of members; associate an expiry date with the electronic communication group, the expiry date having been established by the client device; store data associated with the electronic communication group; and subsequent to passage of the expiry date, delete the data associated with the electronic communication group.

There may also be provided a computer readable medium comprising computer executable instructions for operating an electronic client device, the computer readable medium comprising instructions for: creating an electronic communication group on the electronic client device, the electronic communication group including a plurality of members; establishing an expiry date for the electronic communication group; providing the expiry date to at least one other member in the electronic communication group; enabling at least some data associated with the electronic communication group to be saved locally thereon prior to passage of the expiry date; and enabling the data associated with the electronic communication group to be deleted subsequent to the passage of the expiry date.

There may also be provided a computer readable medium comprising computer executable instructions for operating a server device, the computer readable medium comprising instructions for: establishing an electronic communication group on the server device in response to creation thereof by a client device, the electronic communication group including a plurality of members; associating an expiry date with the electronic communication group, the expiry date having been established by the client device; storing data associated with the electronic communication group; and subsequent to passage of the expiry date, deleting the data associated with the electronic communication group.

### BRIEF DESCRIPTION OF THE DRAWINGS

Embodiments will now be described by way of example only with reference to the appended drawings wherein:

FIG. 1 is a schematic diagram illustrating a number of electronic communication groups and a group server having a group database.

FIG. 2 is a block diagram illustrating an example configuration for the server and two of the client devices shown in FIG. 1.

FIG. 3 is an example screen shot of a create new group interface.

FIG. 4 is an example screen shot of an auto expiry settings interface.

FIG. 5 is an example screen shot of an invitation to join a group.

FIG. 6 is an example screen shot of a group expiry reminder.

FIG. 7 is an example screen shot of a local save selection interface.

FIG. 8 is an example screen shot of a group expiry extension proposal interface.

FIG. 9 is an example screen shot of a proposed extension notification.

FIG. 10 is an example screen shot of an extension vote results notification.

FIG. 11 is an example screen shot of an early group removal notification and local save reminder.

FIG. 12 is an example screen shot of an early group removal follow up notification.

FIG. 13 is a flow chart illustrating example computer executable instructions performed by group members in a group expiry extension proposal process.

FIG. 14 is a flow chart illustrating example computer executable instructions performed by a group creator, the server, and a group member for creating a new group with an automatic expiry date set by the group creator.

FIG. 15 is a flow chart illustrating example computer executable instructions performed by a client device continuing from operation A in FIG. 13.

FIG. 16 is a flow chart illustrating example computer executable instructions performed by the server continuing from operation B in FIG. 13.

FIG. 17 is a block diagram illustrating an example configuration for a serverless configuration and three of the client devices shown in FIG. 1.

FIG. 18 is a block diagram of an example configuration for a mobile client device.

### DETAILED DESCRIPTION OF THE DRAWINGS

It has been recognized that for electronic communication groups that are formed to compliment particular purposes or events, group members tend to join the group and be active before and during the event, but the activity and the purpose of the group may diminish after the event.

To address this concern, the following provides a mechanism for group deletion based on the detection of the completion of the purpose of an event as specified upon creation of the group. By specifying the expiry date of a group at the time of creation and notifying members of the expiry date, complete deletion of the group can be performed on the server side to conserve memory, while enabling group members to save content locally before the group is completely deleted. It can be appreciated that an electronic communication group herein may refer to any plurality of associated entities that are operable to communicate with each other, often for a common purpose or for any other organizational reasons.

As will be described in greater detail below, upon creating a group, an expiry date can be set for the group and this expiry date and a purpose therefor notified to the members that join the group, and users are then able to join the group. Upon detecting the expiry date, the group members can be notified and permitted to perform a local save, extend the expiry date, etc. The server may then delete its copy of the data and the client devices enable or enforce deletion locally to recapture storage space.

An example use case for the principles discussed below is in the creation of a group for an academic course. Since the group may only be relevant for the duration of the course and until the marks have been received (and perhaps a buffer period of time until discussion over marks subsides), the group creator can identify that the beginning of the next term is an appropriate group termination event. In this way, the members do not have to remember to leave the group at the end of the term and the server can wipe out the old content per the above and release the name for future groups to use. Presumably, the members that join can be notified of the group termination time as well as being reminded before termination so that they are aware of when the content is no longer available. Moreover, by reminding or otherwise notifying members of the expiry date before it occurs, options such as extending the expiry date can be employed. Other use cases include creating a group for a weekend outing, vacation, conference, fundraiser, etc.

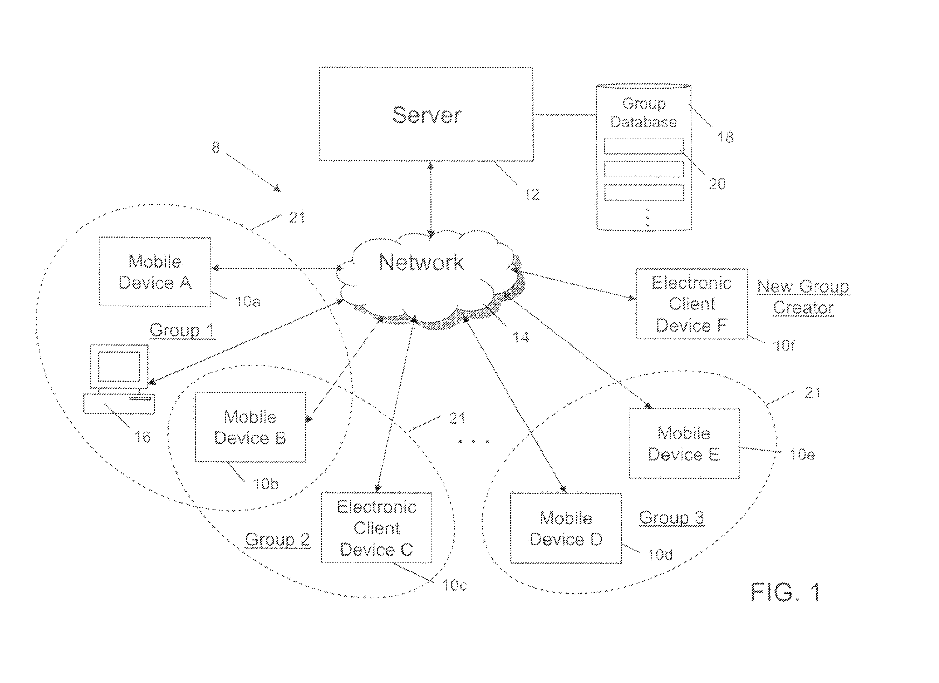

Turning now to FIG. 1, an example electronic communication system 8 is shown, which comprises a number of mobile communication devices 10 (mobile device 10 hereinafter) that may communicate with each other and a server 12 via a network 14. Also shown in FIG. 1 is a personal computer (PC) 16 to illustrate that other computing devices with communication capabilities may also communicate with other devices and the server 12 via the network 14. The network 14 can be an internal network such as a LAN or a global system of interconnected networks such as the Internet. The network 14 may comprise wired communication capabilities, wireless communication capabilities or both. It can be appreciated that the network 14 shown in FIG. 1 is for illustrative purposes and for ease of explanation only. The server 12 in this example comprises a group database 18 which as will be explained in greater detail below stores a set of group data 20 for each of a corresponding number of groups 21. It may be noted that the term "group" used herein can also refer to electronic communication groups and is used only for brevity.

Three example groups are shown in FIG. 1, and are delineated by the dashed lines. It can be appreciated that any number of group members may form a single group 21 and any combination of device types can be permitted. Also, the same device can belong to more than one group as illustrated by the inclusion of Mobile Device B in both Group 1 and Group 2. Also shown in FIG. 1 is another electronic client device 10f also identified as Electronic Client Device F, which in this example is a new group creator, that being, electronic client device 10f creates a new group 21, which then establishes a new set of group data 20 in the group database 18. The devices 10, 16, hereinafter also commonly referred to as "electronic client devices" may locally store all or a portion of the group data 20, and may also store group-related data (not shown) that is in addition to what is stored in the group database 18.

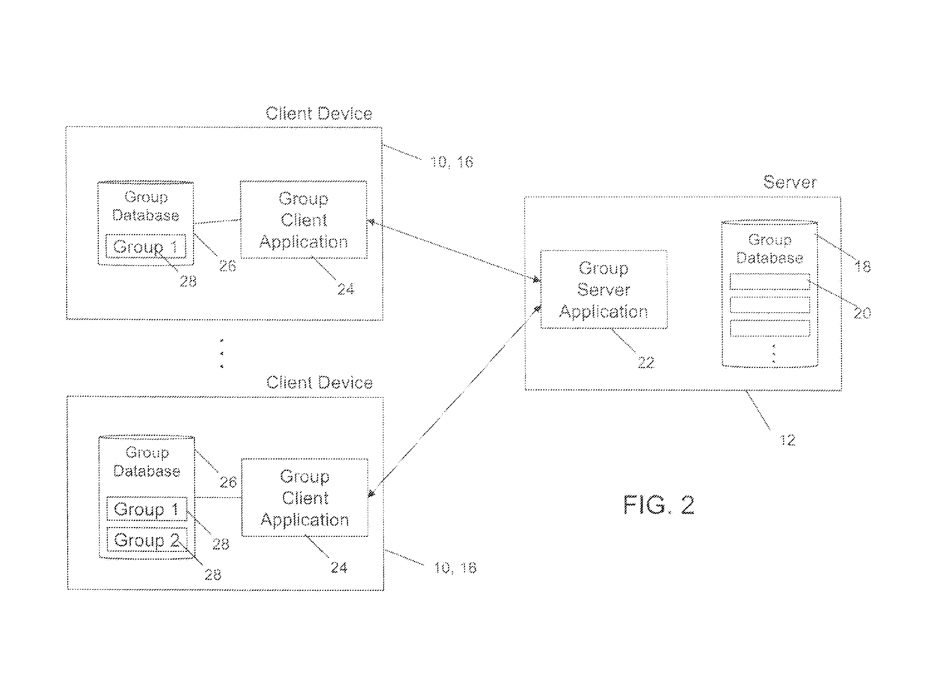

FIG. 2 illustrates an example configuration for two example client devices 10, 16 and the server 12. The server 12 comprises a group server application 22 which provides an interface for enabling client devices 10, 16 to participate in group activities via the server 12. As can be appreciated from FIG. 2, the group database 18 may be internal to the server 12 or external as illustrated in FIG. 1. Each client device 10, 16 comprises a group client application 24, which is used by the client device 10, 16 to participate in group activities and enables the client device 10, 16 to interface with the server 12 and in some embodiments directly with other client devices 10, 16. The client device 10, 16 also comprises a local group database 26 used to locally store group data 28. As can be appreciated from FIG. 2, the client device 10, 16 stores a set of local group data 28 for each group of which it is a member while the server 12 stores a set of global group data 20 for all groups which it hosts.

The group client application 24 in this example is used for enabling the client devices 10, 16 to communicate using a group-based medium, such as social networking, instant messaging, etc. The corresponding group server application 22 can be configured to enable a client device 10, 16 to post data for the group 21 on the server 12 or to communicate with another client device 10, 16 via the server 12 as is well known in the art.

It will be appreciated that any module or component exemplified herein that executes instructions may include or otherwise have access to non-transitory computer readable media such as storage media, computer storage media, or data storage devices (removable and/or non-removable) such as, for example, magnetic disks, optical disks, or tape. Computer storage media may include volatile and non-volatile, removable and non-removable media implemented in any method or technology for storage of information, such as computer readable instructions, data structures, program modules, or other data. Examples of computer storage media include RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by an application, module, or both. Any such computer storage media may be part of the mobile device 10, PC 16, server 12, etc., or accessible or connectable thereto. Any application or module herein described may be implemented using computer readable/executable instructions that may be stored or otherwise held by such computer readable media.

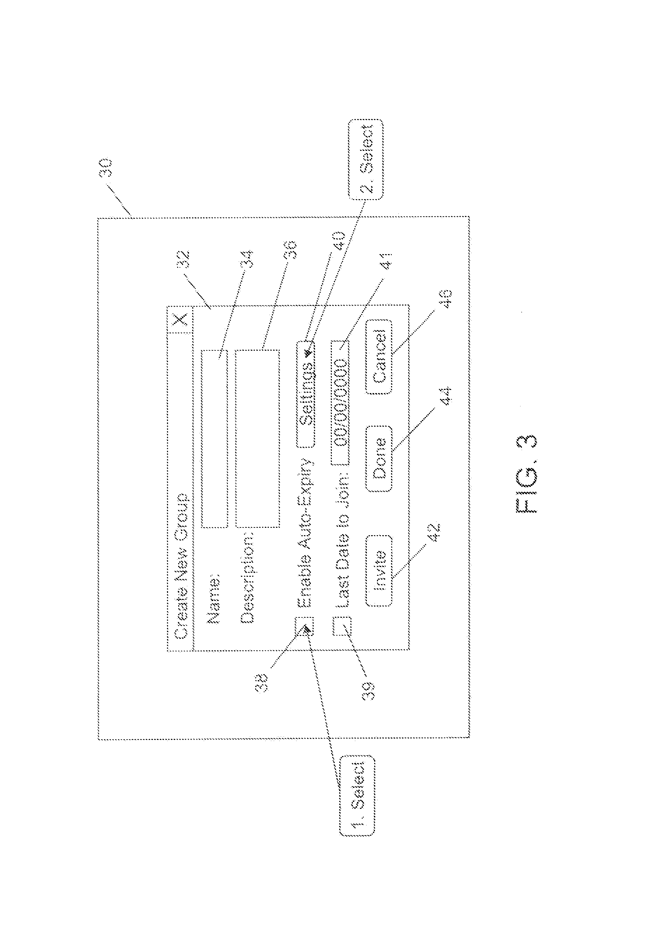

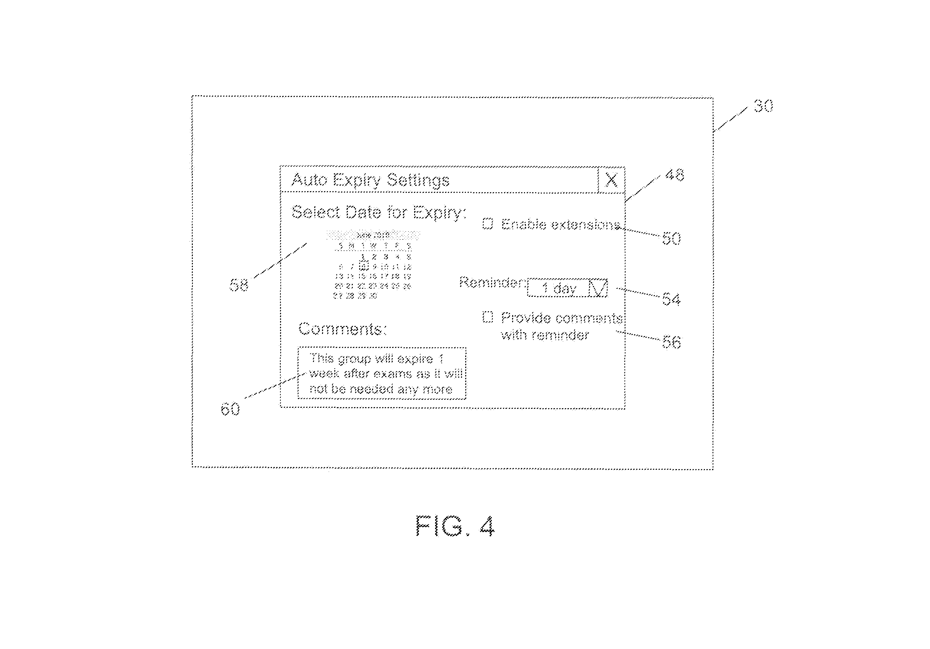

FIG. 3 illustrates an example screen shot of a create new group interface 32 that can be initiated from within the group client application 24 to create a new group 21. The create new group interface 32 in this example provides a name field 34 and description field 36 for naming and identifying the group 21. Also provided is an enable auto-expiry option 38 which, if selected, allows the group creator to designate an expiry date for the group. A settings button 40 may then be selected in order to designate parameters associated with the expiry date. The create new group interface 32 also provides an invite button 42 to initiate a process for inviting a new member (not shown), a done button 44 to complete the group creation process, and a cancel button 46 to cancel the group creation process. It can be appreciated that the options shown in FIG. 3 are for illustrative purposes only and various other configurations may be used - e.g. a new group wizard. By making a first selection to enable the auto-expiry option 38 and then a second selection of the settings button 40 as shown in FIG. 3, an auto-expiry settings interface 48 is displayed as shown in FIG. 4. In other embodiments, an auto-expiry date can be enforced rather than providing the option to not include an expiry date.

The example interface 48 shown in FIG. 4 enables selection of an expiry date using a calendar selection mechanism 58, and enables entry of comments 60 in order to notify a prospective member of the expiry date and the purpose for having the group 21 expire. In the example shown, the comments 60 indicate that the group will expire 1 week after exams as it will not be needed after that time. This allows the user to not only make group members aware of the termination of the group data 20 once the expiry date passes, but also allows for an explanation to be provided, in order to enable the group members to prepare for the deletion of the data (e.g. to perform a local save, etc.).

Although FIGS. 3 and 4 illustrate one embodiment wherein the group expiry date is established at the time of creating the group 21, it can be appreciated that in other embodiments, the expiry date could instead be added after the group 21 has been created. For example, an option to access the auto expiry settings interface 48 could be accessible via the group client application 24 at some later time, or a prompt or reminder could be displayed at some predetermined time after creating the group 21 to enable the user to add an expiry date at that time. Similarly, the settings interface 48 could also be accessible to the other members of the group 21, i.e. other than the group creator, to enable the other members to propose the creation of an expiry date at some later time after the group 21 has been created.

It can also be appreciated that the group client application 24 can relate to a group sharing or messaging application for a social networking or instant messaging platform, or could be integrated into other applications such as a calendar application (not shown). In this way, a group 21 and associated expiry date could be established by selecting an option in a user interface used to create a new calendar appointment. For example, if a new calendar event is being created for a particular event and the event/appointment creator wishes to establish an associated group 21, an option could be displayed that allows the creator to create a group 21 with the same invitees. The expiry date for the group 21 may then coincide with the calendar event time/date, however, as will be explained below, the ability to extend the expiry date could be used to allow further group activities beyond the calendar event. For example, if the calendar event relates to a tournament, the group 21 could be extended beyond the tournament date to allow the group members to discuss the outcomes, congratulate the winner(s), etc.

Turning back to FIG. 3, the create new group interface 32 may also include a last date to join option 39, which in this example comprises a selection box and a date entry field 41. The last date to join option 39 enables the group creator to specify a date prior to the expiry date after which no new members can join. The last date to join option 39 enables the group creator to control when the set of group members can no longer grow in size. The last date to join option 39 would only control the addition of new members and could allow existing members to remove themselves from the group and all group members to continue to use the group 21 and its associated data 20, 28 until the expiry date.

In some circumstances, either the group creator or one of the other group members may wish to extend the life of the group beyond the expiry date. To continue with the above example wherein the group 21 relates to an academic course, some group members may wish to extend the group to continue discussing matters beyond 1 week after exams. To accommodate these situations, the group creator can provide flexibility in the expiry date by selecting an enable extensions option 50. By selecting the enable extensions option 50 a proposal can be made to extend the expiry date, as will be described in greater detail below. Various other options can also be provided, e.g. to control the way in which reminders are provided, and the information that is included in such reminders. For example, a reminder option 54 can be used to set when a reminder will be displayed pertaining to the expiry date. The reminder can be relative to the expiry date as shown in FIG. 4 and would then adjust automatically according to the expiry date, e.g. even if the expiry date is extended; or can be an absolute date or a server-side setting; and thus can be flexible to suit particular applications and preferences. Also, a provide comments with reminder option 56 can be selected in order to supplement the reminder with the comments 60 to provide context for the impending deletion of the group 21 and its group data 20. It can be appreciated that various other options can be included in the auto expiry settings interface 48 and those shown are for illustrative purposes only.

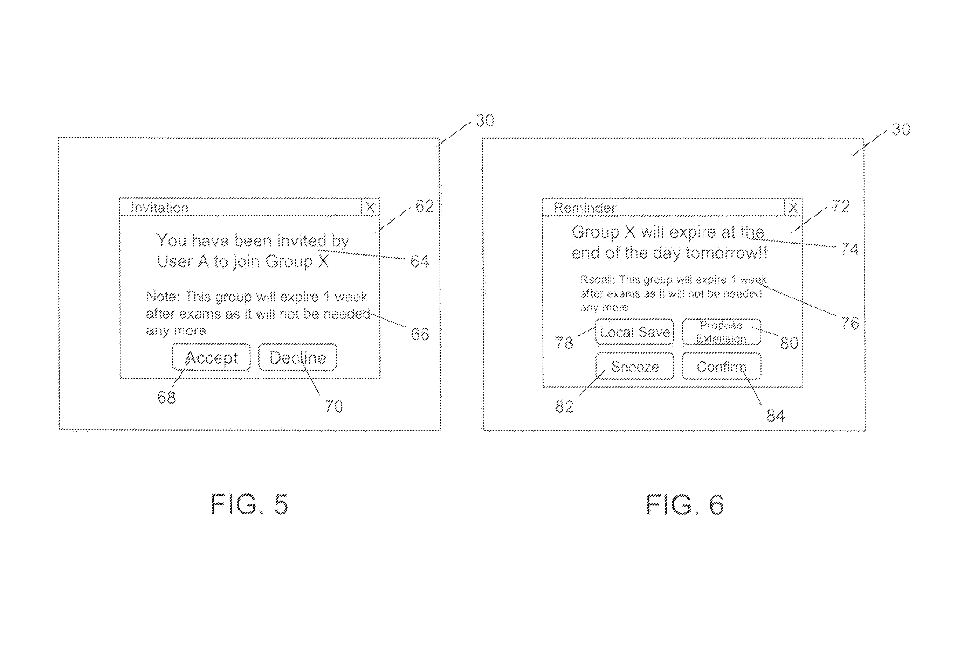

By establishing auto-expiry settings as shown in FIG. 4, an invitation 62 can be sent to a prospective member for joining the group, e.g. by selecting the invite button 42 shown in FIG. 3. FIG. 5 illustrates an example invitation 62 that is received and displayed by a prospective member. The invitation 62 comprises a headline 64 indicating who has asked the prospective member to join what group 21. The invitation in this example includes a note 66, which corresponds to the comments 60 shown in FIG. 4. An accept button 68 can be selected to join the group 21 or a decline button 70 can be selected to decline the invitation.

For members that have accepted the invitation 62 and thus joined the group 21, a reminder 72 may be displayed as the expiry date approaches as shown in FIG. 6. It can be appreciated that the reminder 72 can be initiated based on the settings dictated by the group creator or can be set locally by the member (e.g. using a group application profile or other interface - not shown). The reminder 72 in this example comprises a headline 74 indicating when the particular group 21 will expire. The reminder 72 may also comprise a recall note 76 to provide context for the reminder. In this example, the recall note 76 comprises the comments 60 that indicate the purpose of the expiry date provided by the group creator when creating the new group 21. The reminder 72 can be used for various purposes. In this example, a local save button 78 can be selected to initiate a local save process for group data 20 if such data is to be unavailable once the group 21 is deleted. For example, if certain (or all) group data 20 is stored only at the server 12, a local save can allow the client device 10, 16 to retain selected items beyond the lifetime of the group without having to maintain group membership. A propose extension button 80 is also provided in this example, which can be selected in order to initiate an extension proposal process as will be explained below. It can be appreciated that if the enable extensions option 50 has not been selected, the propose extension button 80 may be concealed, removed, greyed-out or otherwise suppressed. A snooze button 82 may also be provided to allow the reminder to be displayed again at a later time, similar to a calendar event reminder. A confirm button 84 can also be provided to allow the user to acknowledge that they are aware of the upcoming expiry date.

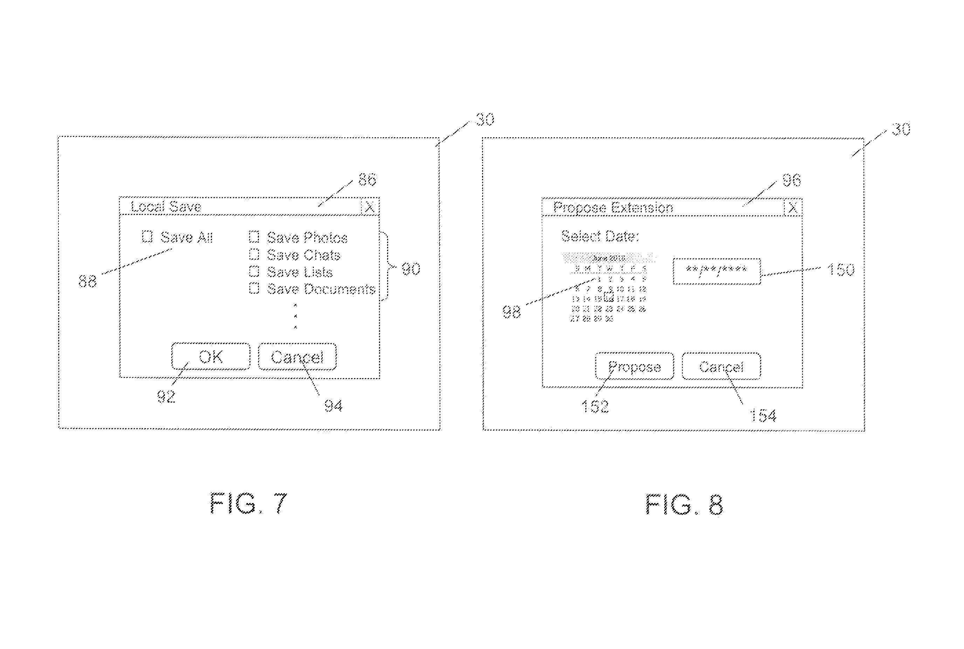

By selecting the local save button 78, a local save interface 86 is displayed as shown in FIG. 7. The local save interface 86 in this example provides a save all option 88 to allow the client device 10, 16 to ensure a copy of group data 20 can be stored locally. Alternatively, various category options 90 can be used to select various types of data to save locally, e.g. photos, chats, lists, documents, etc. An ok button 92 is provided to confirm the selections, and a cancel button 94 may be selected to cancel the local save process.

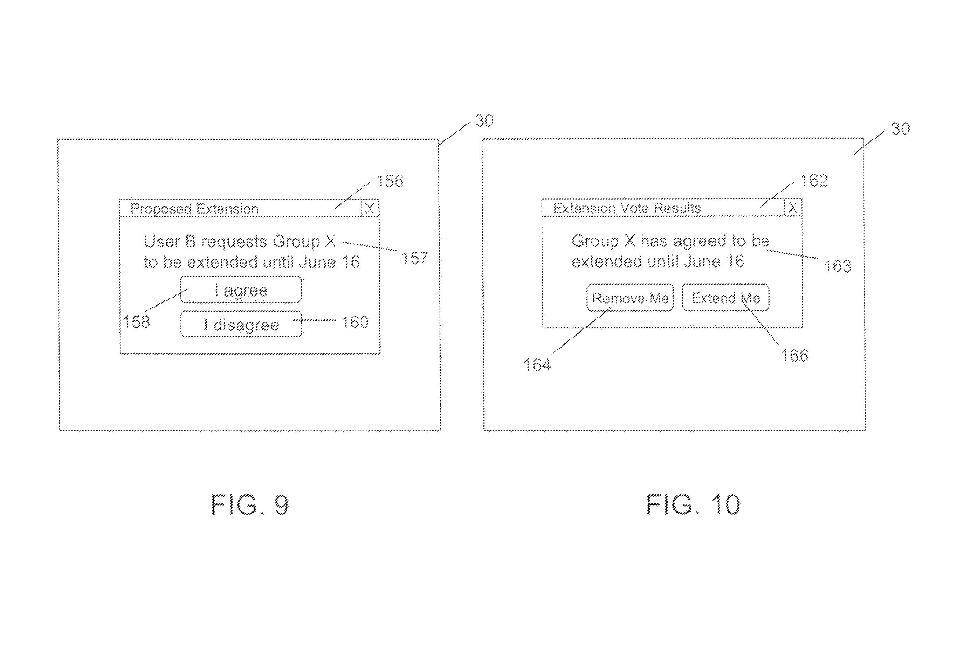

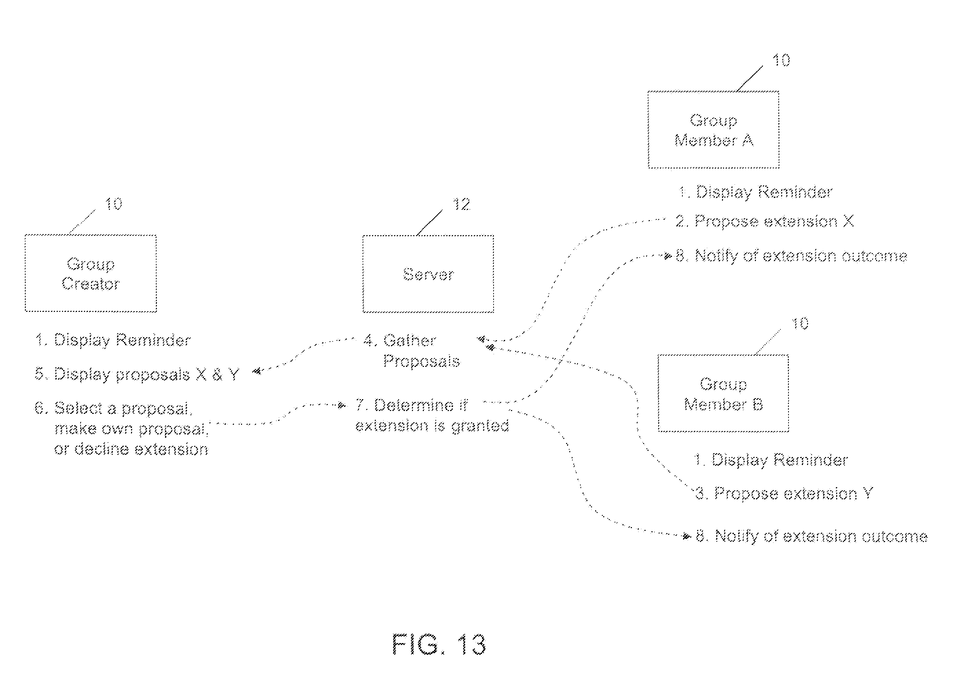

By selecting the propose extension button 80 in FIG. 6, a propose extension interface 96 is displayed as shown in FIG. 8. In this example, the propose extension interface 96 comprises a date selection mechanism 98 and a date entry box 150 either of which can be used to select a proposed extension date for the expiry of the group 21. A propose button 152 is provided to enable the user to submit their proposal, and a cancel button 154 enables the user to cancel the extension proposal process. By selecting the propose button 152, the date identified in the date selection mechanism 98 or data entry box 150 is provided as a proposed extension to the expiry date. Various mechanisms can be employed to allow or deny the proposed extension. For example, the ability to extend can lie solely in the group creator, or the proposal can be sent to the other members of the group in the form of a proposed extension notification 156 as shown in FIG. 9 in order to allow others in the group to vote on the extension. It can be appreciated that by allowing group members to propose extensions, multiple group members may propose different extensions at the same time. To accommodate such a scenario, a proposal window can be established and the group creator given the multiple requests for controlling which if any is accepted. Alternatively, all proposed extension times can be gathered and a multiple-choice vote (not shown) displayed for each member to choose the most acceptable extension date. An example extension proposal process is shown in FIG. 13 described later. It can also be appreciated that the notification 156 can be generated and distributed by the server 12 or can be sent directly to other members via other communication channels.

FIG. 9 illustrates an example wherein a single extension proposal is processed. The proposed extension notification 156 in this example includes a headline 157 to notify the members that a particular user has requested that a particular group 21 be extended until the proposed date. An I agree button 158 is provided to enable the recipient member to accept this extension, and an I disagree button 160 is provided to enable the recipient member to vote against the extension or the extended date. It can be appreciated that the notification 156 and voting process shown in FIG. 9 is only one example. In other embodiments, a proposed extension can be automatically granted with an option for members to opt out and thus delete themselves from the group 21 instead of extending. Also, member status can be used to grant privileges for extending the expiry date. For example, the group creator may be able to apply veto power over proposed extensions and effect changes unilaterally. Conversely, the expiry date can be fixed with no opportunity to extend, e.g. if the enable extensions option 50 has not been selected.

In the present example, by gathering responses from recipient members using the proposed extension notification 156, a democratic poll can be used to determine if the expiry date should be extended. FIG. 10 illustrates an example vote results notification 162. The vote results notification 162 comprises a headline 163 indicating the vote results. A remove me button 164 is provided to enable the user to remove themselves from the group 21 despite the extension. Conversely, an extend me button 166 enables the user to accept the extension and remain in the group 21 until the extended expiry date.

It can be appreciated that the extension proposal and voting process could also be initiated at the same time or before accepting the invitation 62 shown in FIG. 5. For example, since the invitation 62 in this example indicates the expiry date, a propose extension button 80 such as that shown in FIG. 6 could also be incorporated into the invitation 62 to allow prospective members the ability to affect the expiry date before they agree to join the group 21. This can be particularly advantageous for groups wherein the group creator is not necessarily the most active or otherwise does not necessarily control the group 21. Other members that may have more influence over the group 21 but did not create the group 21 could then exercise such control before the group 21 forms rather than wait until closer to the expiry date to extend the life of the group 21.

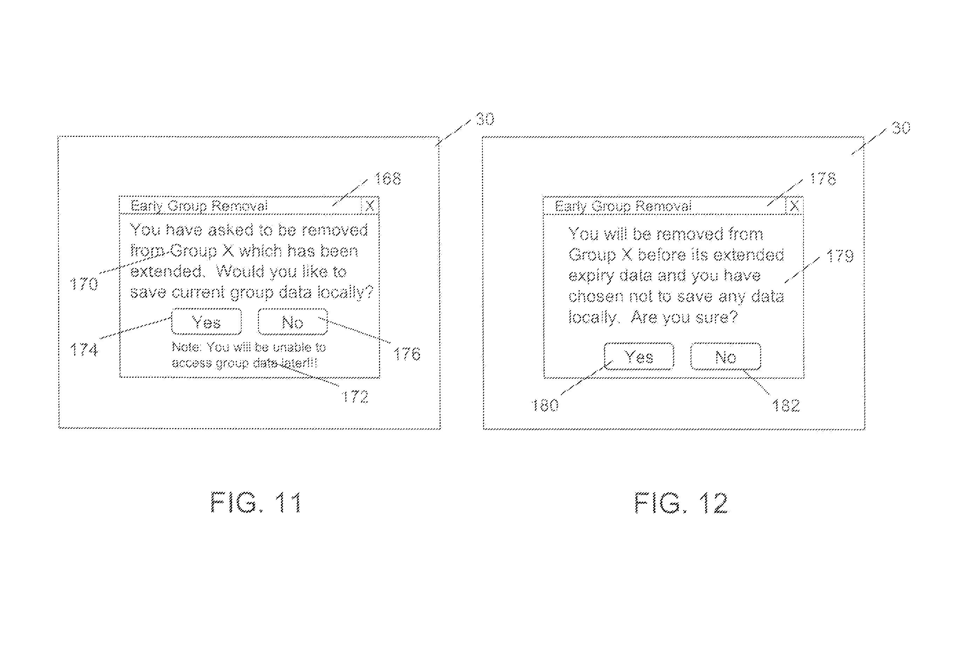

Turning back to FIG. 10, by selection the remove me button 164, an early group removal notification 168 is displayed as shown in FIG. 11. The early group removal notification 168 in this example comprises a notice 170 confirming that the user has asked to be removed from a particular group 21 despite the group's expiry date being extended. The notice 170 in this example also includes a query as to whether or not the user wishes to save the current group data 20 locally. By selecting a yes button 174, the local save interface 86 shown in FIG. 7 can be displayed. By selecting a no button 176, the user can opt out of saving data locally, e.g. if they have what they desired already from the group data 20. The early group removal notification 168 may also include a warning 172 as shown in FIG. 11 to make the user aware of the implications of removing themselves from the group 21 at that time. By selecting the no button 176, a further early group removal notification 178 can be displayed as shown in FIG. 12 that includes a final warning 179 asking again if the user wishes to save any data locally. A yes button 180 can be selected to initiate display of the local save interface 86 shown in FIG. 7. A no button 182 can be selected to confirm that the user does not wish to locally save any group data 20. It can be appreciated that other prompts can be provided for notifying the user of the implications of leaving a group. For example, a notification (not shown) can be provided which prompts the user when leaving a group that data they have contributed will remain as part of the group data 20 after they leave the group. This would enable the user to remove personal data from the group data 20 prior to confirming that they wish to be removed from the group.

As discussed above, various mechanisms can be employed to control the expiry date extension proposal process. One such example will now be described making reference to FIG. 13. In the example shown in FIG. 13, the group creator is responsible for selecting or denying the requests to extend the group. At 1, the group creator and group members display a reminder regarding an upcoming group expiry date, e.g. 2 days prior to the expiry date. In this example, group member A proposes a first extension, extension X at 2, and group member B proposes a second extension, extension Y at 3. The server 12 then obtains the proposals at 4. It can be appreciated that the proposals would not necessarily be gathered at the same time and thus a proposal window could be enforced, whereby if the group member does not respond to the reminder notification 72 within this period of time, the propose extension option 80 is suppressed. Once the proposal window expires (e.g. 1 day prior to expiry date), the server 12 provides the gathered proposals to the group creator such that the group creator's mobile device 10 can display the proposed extension dates (X and Y in this example) at 5. The group creator may then either select one of the proposals, make their own proposal, or decline all extensions at 6. The server 12 is then made aware of the group creator's decision at 7 and determines if an extension has been granted in order to update its records. The group members then notify their respective users of the outcome of the extension proposal process at 8.

It will be appreciated that the process shown in FIG. 13 can be modified to enable a voting procedure by displaying the proposals to all group members at 5 and either having the group creator confirm the democratic outcome (if such permissions exist) or the server 12 can confirm the outcome by processing the votes. It can be appreciated that various criteria may be employed to handle ties in the voting procedure (e.g. longest extension wins), etc.

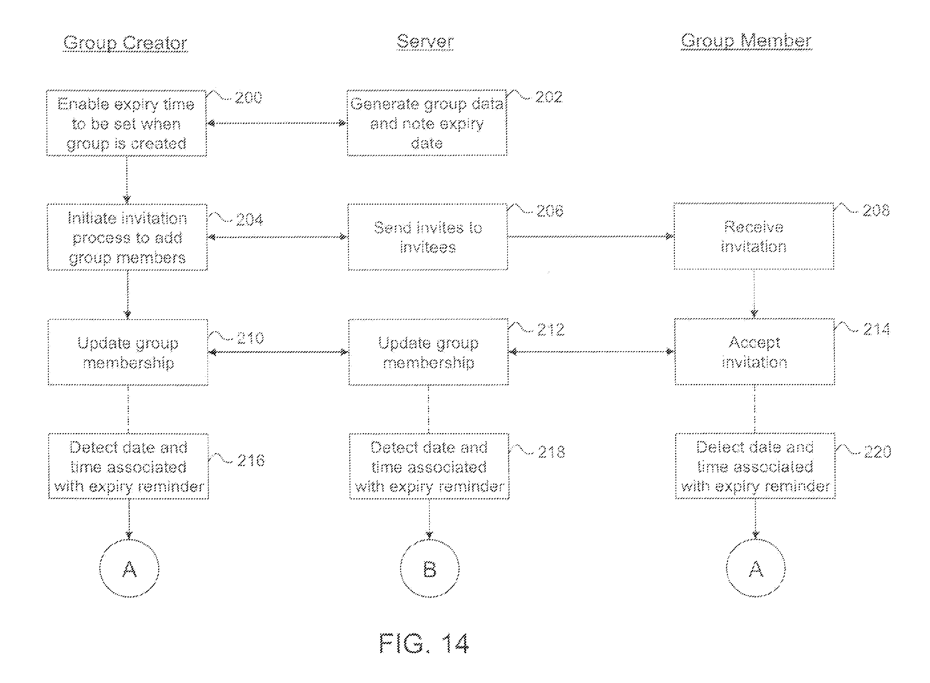

Turning now to FIG. 14, example computer executable operations are shown that may be executed by a group creator device 10, 16, the server 12, and a group member device 10, 16 being invited to join a new group 21. At 200, the group creator client device 10, 16 enables an expiry time to be set when the group 21 is being created, e.g. by providing the enable auto-expiry option 38 shown in FIG. 3. At 202, the server 12 generates group data 20 thereby establishing the new group 21 and associates the expiry date set by the group creator. At 204, the group creator initiates an invitation process to add group members. In this example, the server 12 facilitates the delivery of an invitation 62 to the prospective group member client device 10, 16 at 206 and the group member client device 10, 16 receives and displays the invitation 62 at 208. It can be appreciated that the invitation process could also be performed without relying on the server 12. However, in this example, the server 12 at a minimum is made aware of the invite in order to update the group data at 212. Assuming that the group member accepts the invitation at 214, the server updates the group membership at 212 and the group creator is also made aware of the acceptance at 210 in order to update their local data regarding group membership. This process may be repeated for other group members and only one group member invitation process is shown for ease of explanation.

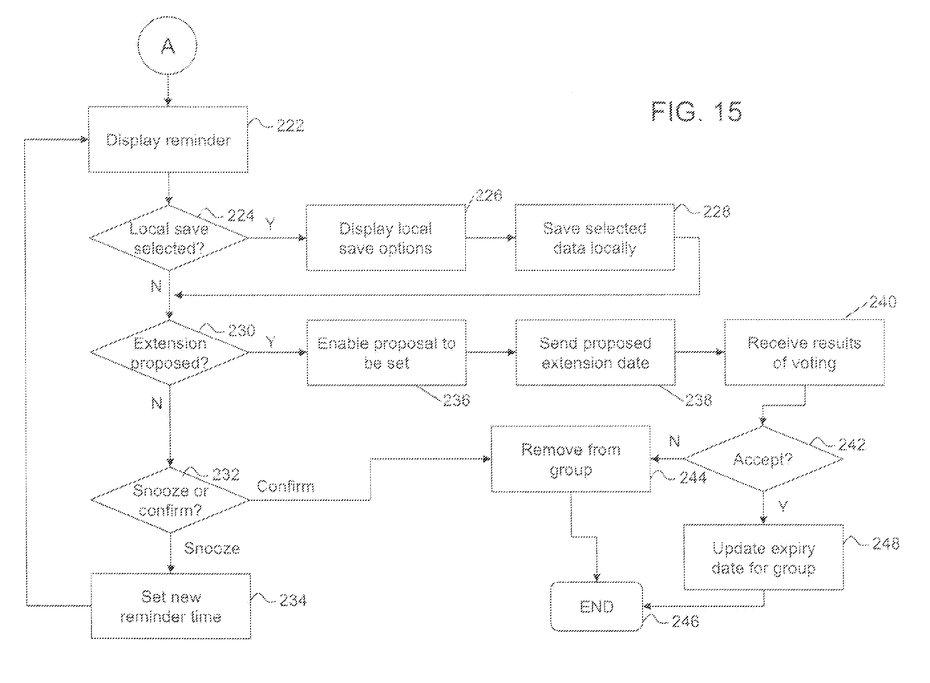

The group 21, once created, exists for an amount of time dictated by the chosen expiry date. As the date/time on which a reminder associated with the expiry date is meant to be displayed, the respective devices 10, 16, 12 detect that date/time at 216, 218, and 220 as shown in FIG. 14. For the client devices 10, 16, a reminder process begins at A, shown in FIG. 15. Turning now to FIG. 15, a reminder is displayed at 222, e.g. the reminder 72 shown in FIG. 6. At 224, the group client application 24 determines if the user has opted to perform a local save. If so, the local save options are displayed at 226 and the selections made are used to selectively save group data 20 locally on the client device 10, 16 at 228. If not, or following 228, the group client application 24 then determines at 230 if an extension has been proposed. If not, the group client application 24 determines if the user has opted to snooze the reminder at 232. If the snooze has been selected, a new reminder time is set at 234 and the process is repeated at 222 at the new reminder time. If the group client application 24 detects selection of an option to propose an extension to the expiry date at 230, the group client application 24 enables the proposed extended expiry date to be set at 236. The proposed extension date is then sent at 238, e.g. to the server 12 or directly to other group member client devices 10, 16. The results of the voting process are then received at 240. The group client application 24 then determines if the user has opted to accept the voted-upon extended expiry date. If not, the client device 10, 16 is removed from the group 21 at 244. It can also be seen in FIG. 15 that if the group client application 24 has detected selection of the confirm option at 232, the client device 10, 16 is also removed from the group at 244. If the extended expiry date is accepted at 242, the expiry date is updated for that particular group 248 and the process ends at 246.

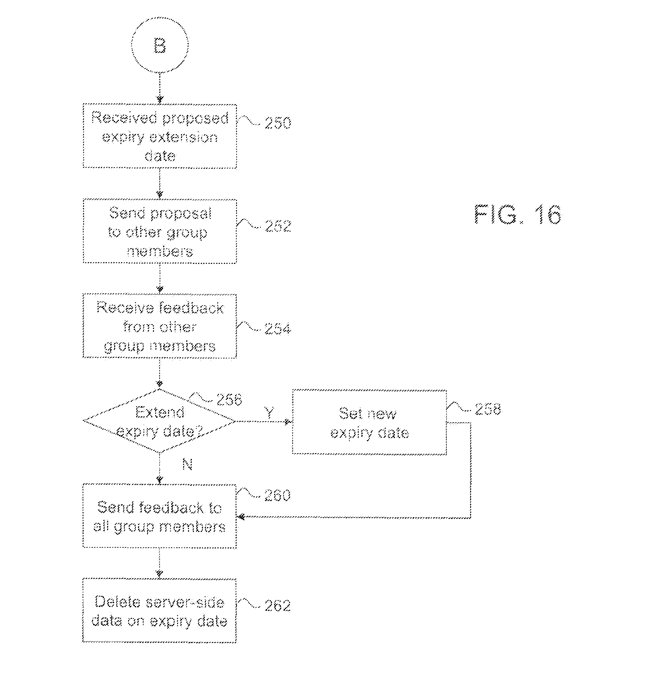

Returning to FIG. 14, upon detecting the date/time associated with the expiry reminder at 218, the server 12 initiates a reminder and extension process at B, shown in FIG. 16. Turning to FIG. 16, in this example, the server 12 receives a proposed expiry extension date at 250. The extension proposal is then sent to the other group members at 252. Feedback from the voting process is then received at 254. The group server application 22 then determines at 256 if the voting process has resulted in an extended expiry date. If so, a new expiry date is set at 258. If not, feedback is sent to all group members indicating that the original expiry date will be adhered to at 260 and the server-side group data 20 is deleted at 262. It can be appreciated that if no extension proposals are received, the process at B may include only operation 262.

It can therefore be seen that by enabling an expiry date to be set at the time of creating a group, unnecessary data storage can be avoided. When the purpose for the group expires, as dictated by the group creator and/or in conjunction with other group members, server-side storage can be recaptured and local saving initiated at the client-side. By providing reminders of the expiry date and enabling extensions to be proposed and voted on, should the purpose for the group warrant more time, the group 21 can be made to exist for a longer period of time.

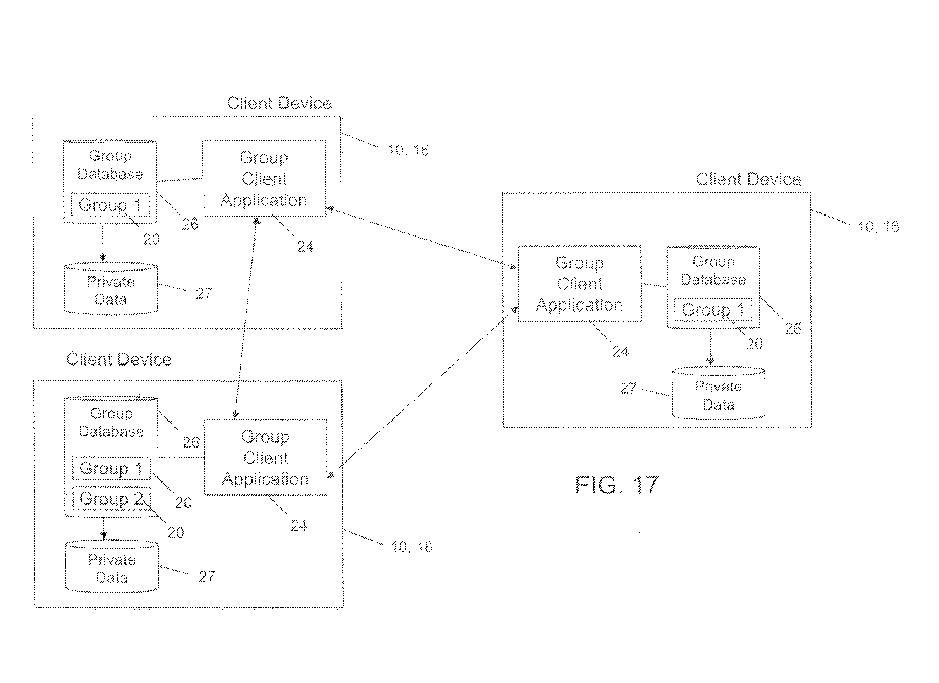

Although the above principles have been discussed with respect to groups in a server-based environment, such principles equally apply to serverless environments, e.g. wherein each group member stores and updates its own copy of the group data 20 as shown in FIG. 17. In FIG. 17, it can be seen that in such a configuration, each client device 10, 16 includes a copy of the group data 20 that would have been stored by the server 12. The group data 20 is then updated by having the client devices 10, 16 distribute updated group data 20 amongst themselves rather than accessing a central server to maintain an up-to-date copy. When configured as shown in FIG. 17, the principles of setting an expiry date, last date to join the group, etc. still apply, however, the deletion of the group would occur on each device 10, 16 following a local save. For example, upon detecting that the expiry date has arrived or is approaching, the user may be prompted to perform a local save (e.g. as shown in FIG. 6) and any desired portions of the group data 20 would be moved to a private data 27 section of memory on the respective client device 10, 16.

Once the group has completely expired, the group data 20 can be wiped from the respective client device 10, 16 with any saved data now being accessible from the private data 27 section of memory. It can be appreciated that for processes such as managing extensions, etc., since the group data 20 is updated on each client device 10, 16, at this time, any proposed extensions can be accumulated and at the appropriate time displayed to the group creator or other members, according to the extension permissions for that particular application.

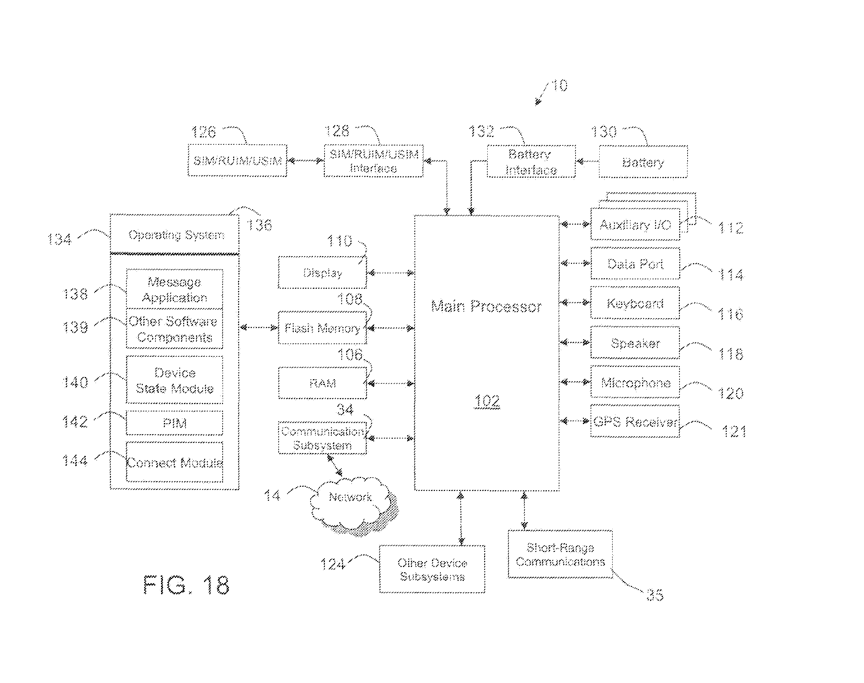

FIG. 18 provides a block diagram of an example embodiment of a mobile device 10. The mobile device 10 comprises a number of components such as a main processor 102 that controls the overall operation of the mobile device 10. Communication functions, including data and voice communications, are performed through a communication subsystem 104. The communication subsystem 104 receives messages from and sends messages to a wireless network 14. In this example embodiment of the mobile device 10, the communication subsystem 104 is configured in accordance with the GSM and GPRS standards, which are used worldwide. Other communication configurations that are equally applicable are the 3G and 4G networks discussed above. New standards are still being defined, but it is believed that they will have similarities to the network behaviour described herein, and it will also be understood by persons skilled in the art that the embodiments described herein are intended to use any other suitable standards that are developed in the future. The wireless link connecting the communication subsystem 104 with the wireless network 14 represents one or more different Radio Frequency (RF) channels, operating according to defined protocols specified for GSM/GPRS communications.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, a GPS receiver 121, short-range communications 122, and other device subsystems 124. As will be discussed below, the short-range communications 122 can implement any suitable or desirable device-to-device or peer-to-peer communications protocol capable of communicating at a relatively short range, e.g. directly from one device to another. Examples include Bluetooth®, ad-hoc WiFi, infrared, or any "long-range" protocol re-configured to utilize available short-range components. It will therefore be appreciated that short-range communications 122 may represent any hardware, software or combination of both that enable a communication protocol to be implemented between devices or entities in a short range scenario, such protocol being standard or proprietary.

Some of the subsystems of the mobile device 10 perform communication-related functions, whereas other subsystems may provide "resident" or on-device functions. By way of example, the display 110 and the keyboard 116 may be used for both communication-related functions, such as entering a text message for transmission over the network 14, and device-resident functions such as a calculator or task list.

The mobile device 10 can send and receive communication signals over the wireless network 14 after required network registration or activation procedures have been completed. Network access is associated with a subscriber or user of the mobile device 10. To identify a subscriber, the mobile device 10 may use a subscriber module component or "smart card" 126, such as a Subscriber Identity Module (SIM), a Removable User Identity Module (RUIM) and a Universal Subscriber Identity Module (USIM). In the example shown, a SIM/RUIM/USIM 126 is to be inserted into a SIM/RUIM/USIM interface 128 in order to communicate with a network. Without the component 126, the mobile device 10 is not fully operational for communication with the wireless network 14. Once the SIM/RUIM/USIM 126 is inserted into the SIM/RUIM/USIM interface 128, it is coupled to the main processor 102.

The mobile device 10 is typically a battery-powered device and in this example includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 10. Although current technology makes use of a battery, future technologies such as micro fuel cells may provide the power to the mobile device 10.

The mobile device 10 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included, as is well known to those skilled in the art.

The subset of software applications 136 that control basic device operations, including data and voice communication applications, may be installed on the mobile device 10 during its manufacture. Software applications may include a message application 138, a device state module 140, a Personal Information Manager (PIM) 142, a connect module 144 and an IT policy module 146. A message application 138 can be any suitable software program that allows a user of the mobile device 10 to send and receive electronic messages, wherein messages are typically stored in the flash memory 108 of the mobile device 10. A device state module 140 provides persistence, i.e. the device state module 140 ensures that important device data is stored in persistent memory, such as the flash memory 108, so that the data is not lost when the mobile device 10 is turned off or loses power. A PIM 142 includes functionality for organizing and controlling data items of interest to the user, such as, but not limited to, e-mail, text messages, instant messages, contacts, events, and voice mails, and may interact with the wireless network 14. A connect module 144 implements the communication protocols that are required for the mobile device 10 to communicate with the wireless infrastructure and any host system 25, such as an enterprise system, that the mobile device 10 is authorized to interface with. An IT policy module 146 receives IT policy data that encodes the IT policy, and may be responsible for organizing and securing rules such as the "Set Maximum Password Attempts" IT policy.

Other types of software applications or components 139 can also be installed on the mobile device 10. These software applications 139 can be pre-installed applications (i.e. other than message application 138) or third party applications, which are added after the manufacture of the mobile device 10. Examples of third party applications include games, calculators, utilities, etc. The additional applications 139 can be loaded onto the mobile device 10 through at least one of the wireless network 14, the auxiliary I/O subsystem 112, the data port 114, the short-range communications subsystem 122, or any other suitable device subsystem 124.

The data port 114 can be any suitable port that enables data communication between the mobile device 10 and another computing device. The data port 114 can be a serial or a parallel port. In some instances, the data port 114 can be a USB port that includes data lines for data transfer and a supply line that can provide a charging current to charge the battery 130 of the mobile device 10.

For voice communications, received signals are output to the speaker 118, and signals for transmission are generated by the microphone 120. Although voice or audio signal output is accomplished primarily through the speaker 118, the display 110 can also be used to provide additional information such as the identity of a calling party, duration of a voice call, or other voice call related information.

For composing data items, such as e-mail messages, for example, a user or subscriber could use a touch-sensitive overlay (not shown) on the display 110 that is part of a touch screen display (not shown), in addition to possibly the auxiliary I/O subsystem 112. The auxiliary I/O subsystem 112 may include devices such as: a mouse, track ball, infrared fingerprint detector, or a roller wheel with dynamic button pressing capability. A composed item may be transmitted over the wireless network 14 through the communication subsystem 104.

Although the above has been described with reference to certain specific embodiments, various modifications thereof will be apparent to those skilled in the art without departing from the scope of the claims appended hereto.

## Claims

1. A method of operating an electronic client device, the method comprising:
creating an electronic communication group on the electronic client device, the electronic communication group comprising a plurality of members;
establishing an expiry date for the electronic communication group;
providing the expiry date to at least one of the plurality of members in the electronic communication group;
enabling at least some data associated with the electronic communication group to be saved locally on the electronic device prior to passage of the expiry date; and
enabling the data associated with the electronic communication group to be deleted subsequent to the passage of the expiry date.

2. The method according to claim 1, wherein the expiry date is provided to a server, the server being responsible for storing the data associated with the electronic communication group.

3. The method according to claim 1 or claim 2, wherein the expiry date is established during creation of the electronic communication group on the client device.

4. The method according to any one of claims 1 to 3, further comprising including an indication of the expiry date in a group invitation provided to at least one other member in the electronic communication group.

5. The method according to any one of claims 1 to 4, further comprising providing a group expiry reminder on the client device prior to the expiry date, the group expiry reminder providing an option to locally save the at least some data associated with the electronic communication group.

6. The method according to claim 5, further comprising enabling the client device to remove itself from the electronic communication group prior to passage of an extended expiry date.

7. The method according to any one of claims 1 to 6, further comprising including an option to propose an extension to the expiry date.

8. The method according to claim 7 wherein the proposed extension is provided to members of the electronic communication group to enable the members to accept or decline the extension, the method further comprising receiving an indication of whether or not the proposed extension to the expiry date is accepted.

9. An electronic client device comprising a processor operable to perform the method according to any one of the preceding claims.

10. A method of operating a server device, the method comprising:
establishing an electronic communication group on the server device in response to creation thereof by a client device, the electronic communication group comprising a plurality of members;
associating an expiry date with the electronic communication group, the expiry date having been established by the client device;
storing data associated with the electronic communication group; and
subsequent to passage of the expiry date, deleting the data associated with the electronic communication group.

11. The method according to claim 10, further comprising including an indication of the expiry date in a group invitation provided to the plurality of members.

12. The method according to claim 9 or claim 10, further comprising providing a group expiry reminder to the client device prior to passage of the expiry date, the reminder providing an option to locally save the data associated with the electronic communication group and, optionally: further comprising enabling the client device to remove itself from the electronic communication group prior to an extended expiry date.

13. The method according to any one of claims 10 to 12, further comprising providing an option to propose an extension to the expiry date prior to passage of the expiry date and, optionally:
further comprising: providing a proposed extension to members of the electronic communication group to enable the members to accept or decline the extension; and determining whether or not the proposed extension to the expiry date is accepted, and, optionally:
further comprising: receiving a plurality of proposed extension requests from a plurality of respective group members; providing the plurality of proposed extension requests to the client device to enable the client device to select one of the proposed extension requests;
and receiving a selection indicative of whether or not one of the proposed extensions to the expiry date is accepted.

14. A server device comprising: a processor operable to perform the method according to any one of claims 10 to 13.

15. A computer readable medium comprising:
computer executable instructions for operating an electronic client device according to the method of claims 1 to 8; or
computer executable instructions for operating a server device according to the method of claims 10 to 13.

## Amended claims

### Amended claims in accordance with Rule 137(2) EPC.

**1.** A method of operating an electronic client device, the method comprising:
creating an electronic communication group on the electronic client device, the electronic communication group comprising a plurality of members, one of which being the electronic client device, wherein creation of the electronic communication group enables each of the plurality of members to communicate with each other and has data associated with the electronic communication group stored on a server device;
detecting establishment of an expiry date for the electronic communication group;
notifying the server device of the expiry date to have the server device delete data associated with the electronic communication group subsequent to the expiry date;
notifying at least one other of the plurality of members in the electronic communication group of the expiry date to provide notice of deletion of data associated with the electronic communication group subsequent to passage of the expiry date; and
enabling at least some data associated with the electronic communication group to be saved locally on the electronic device prior to passage of the expiry date;
wherein the data associated with the electronic communication group is deleted by the server device subsequent to the passage of the expiry date.

**2.** The method according to claim 1, wherein the notice provided to at least one other of the plurality of members comprises an indication of a purpose for the expiry date.

**3.** The method according to claim 1 or claim 2, wherein the expiry date is established during creation of the electronic communication group on the client device.

**4.** The method according to any one of claims 1 to 3, further comprising including an indication of the expiry date in a group invitation provided to the at least one other of the plurality of members in the electronic communication group.

**5.** The method according to any one of claims 1 to 4, further comprising providing a group expiry reminder on the client device prior to the expiry date, the group expiry reminder providing an option to locally save the at least some data associated with the electronic communication group.

**6.** The method according to claim 5, further comprising enabling the client device to remove itself from the electronic communication group prior to passage of an extended expiry date.

**7.** The method according to any one of claims 1 to 6, further comprising including an option to propose an extension to the expiry date.

**8.** The method according to claim 7 wherein the proposed extension is provided to members of the electronic communication group to enable the members to accept or decline the extension, the method further comprising receiving an indication of whether or not the proposed extension to the expiry date is accepted.

**9.** An electronic client device comprising a processor operable to perform the method according to any one of the preceding claims.

**10.** A method of operating a server device, the method comprising:
establishing an electronic communication group on the server device in response to creation thereof by a client device, the electronic communication group comprising a plurality of members, one of which being the client device;
receiving notification of an expiry date established by the client device, the notification to have the server device delete data associated with the electronic communication group subsequent to the expiry date, the expiry date having been sent to at least one other of the plurality of members to provide notice of deletion of data associated with the electronic communication group subsequent to passage of the expiry date and to enable the plurality of members to locally save the data associated with the electronic communication group prior to being deleted by the server device subsequent to the expiry date;
associating the expiry date with the electronic communication group;
storing data associated with the electronic communication group between creation thereof and the expiry date; and
subsequent to passage of the expiry date, deleting the data associated with the electronic communication group.

**11.** The method according to claim 10, further comprising including an indication of the expiry date in a group invitation from the client device, provided to the plurality of members using the server device .

**12.** The method according to claim 10 or claim 11, further comprising providing a group expiry reminder to the client device prior to passage of the expiry date, the reminder providing an option to locally save the data associated with the electronic communication group and, optionally: further comprising enabling the client device to remove itself from the electronic communication group prior to an extended expiry date.

**13.** The method according to any one of claims 10 to 12, further comprising providing an option to propose an extension to the expiry date prior to passage of the expiry date and, optionally:
further comprising: providing a proposed extension to members of the electronic communication group to enable the members to accept or decline the extension; and determining whether or not the proposed extension to the expiry date is accepted, and, optionally:
further comprising: receiving a plurality of proposed extension requests from a plurality of respective group members; providing the plurality of proposed extension requests to the client device to enable the client device to select one of the proposed extension requests; and receiving a selection indicative of whether or not one of the proposed extensions to the expiry date is accepted.

**14.** A server device comprising: a processor operable to perform the method according to any one of claims 10 to 13.

**15.** A computer readable medium comprising:
computer executable instructions for operating an electronic client device according to the method of claims 1 to 8; or
computer executable instructions for operating a server device according to the method of claims 10 to 13.
